# EUROPEAN PATENT APPLICATION

(11) **EP 4 556 964 A1**
(43) Date of publication of application: **21.05.2025**
(21) Application number: 23839411.8
(22) Date of filing: 20.06.2023
(51) Int. Cl.: G02B 5/00, B32B 7/023, B32B 27/00, B32B 27/36

(54) **VIEWING ANGLE CONTROL ELEMENT AND METHOD FOR PRODUCING SAME**

(30) Priority: 12.07.2022 JP 2022111654
(71) Applicant: Shin-Etsu Polymer Co., Ltd., Tokyo 100-0004 (JP)
(72) Inventor: IWAMA Susumu, Shiojiri-shi, Nagano 399-0705 (JP); IMAI Tsuyoshi, Shiojiri-shi, Nagano 399-0705 (JP); TAKIZAWA Naoya, Shiojiri-shi, Nagano 399-0705 (JP)
(74) Representative: Müller Hoffmann & Partner
(86) International application number: PCT/JP2023/022758
(87) International publication number: WO 2024/014236

(57) **Abstract**

Provided is a viewing angle control element that can eliminate the risk of the occurrence of a warp and deformation when the element is made thick in order to narrow the visible range or even if the environment of installation of the image display device becomes high in temperature, as well as a fabricating method of the same. The present invention is a sheet-like viewing angle control element 1 that is mounted on an entertainment monitor on the passenger side dashboard of the car, and includes : a louver layer in which a plurality of light-transmitting strips 3 and a plurality of light-shielding strips 4 are arrayed alternately; a pair of adhesive layers 5 laminated on both sides of the louver layer 2, respectively; and a pair of light-transmissive polycarbonate resin films 6 laminated and bonded respectively to the pair of adhesive layers 5. The light-transmitting strips 3 of the louver layer 2 are each formed from light-transmitting silicone rubber, while the light-shielding strips 4 of the louver layer 2 are formed from colored silicone rubber, and the width of the light-shielding strip 4 is to be 10um or more to 20um or less. Since the louver layer 2 is made of silicone rubber, the risk of a warp or deformation due to heat can be eliminated.

## Description

### Technical Field

The present invention relates to a viewing angle control element that can restrict the driver from peeping into the image display device on the passenger side while driving a car, etc., as well as relating to a method for fabricating the same. Background Technology

In recent years, four-wheeled vehicles are equipped with various devices, one of which is an entertainment monitor. This entertainment monitor is installed on the passenger side of the dashboard of the car, or on the upper back of the driver's seat or passenger seat, and displays various images and plays music to offer a comfortable drive.

When the entertainment monitor is installed on the passenger side of the car's dashboard, a comfortable drive can be expected, but it can also lead the driver in the driver's seat to peep sideways at the image on the entertainment monitor on the passenger side while driving of the car, which results in inadvertent driving with reduced concentration and attention and leads to an accident.

One way of eliminating such concerns is to attach a viewing angle control element to the passenger seat entertainment monitor for controlling the viewing angle (visible range) so as to narrow the viewing angle, making it difficult for the driver to see the passenger seat side entertainment monitor and thus restricting the driver from peeping into the monitor sideways.

Though not shown, conventional viewing angle control elements are formed in light control films with a louver layer in which a plurality of transmissive regions and a plurality of absorbing regions are arranged alternately (see Patent Documents 1 and 2), and when narrowing the viewing angle, the louver layer is made thick.

### Prior Art Documents

### Patent Documents

Patent Document 1: Japanese Patent Application Disclosure No. 2021-507285.
Patent Document 2: International Publication WO2018/225714

### Summary Of The Invention

### Problem To Be Solved By The Invention

The conventional viewing angle control element is formed as described above, and the louver layer is formed by arranging the plurality of transmissive regions and the plurality of absorption regions, and is made thicker when narrowing the visible angle, so there is a risk of a warp. In particular, in the case of the light control film of Patent Document 1, the heights of the plurality of transmissive regions and absorption regions are different, and the obverse and rear surfaces (top and bottom) are not symmetrical, which is prone to cause a warp problem. This problem becomes serious when a separate viewing angle control element is applied to the holding frame of an entertainment monitor to reduce manufacturing costs, instead of integrally sticking the viewing angle control element all over the image display portion of the entertainment monitor, because the control of the viewing angle becomes difficult due to the warp of the viewing angle control element.

Furthermore, when an entertainment monitor with a viewing angle control element attached thereon is arranged on the dashboard of a car, the dashboard is in a position to be easily exposed to sunlight, and the temperature inside the car can reach around 80°C, so high temperatures can cause a large warp of the viewing angle control element. When a large warp occurs in the viewing angle control element, the components of the entertainment monitor are compressed, giving rise to problems such as Newton's rings and lowered viewability.

The present invention has been devised in view of the above, and it is an object of the present invention to provide a viewing angle control element and a fabricating method thereof that can eliminate the risk of a warp or deformation when the element is formed thick to narrow the visible range, and even if the installation environment of the image display device becomes hot.

### Means To Solve The Problem

In order to solve the above problems, the present invention provides a viewing angle control element mounted on an image display device on a passenger side dashboard of a car for restricting a driver from peeping into the image display device on a passenger side by controlling a visible angle within a predetermined range, comprising:
a louver layer in which a plurality of light-transmitting strips and a plurality of light-shielding strips are arrayed alternately;
a plurality of adhesive layers laminated on both sides of the louver layer, respectively; and,
a plurality of light-transmissive polycarbonate resin films laminated and bonded to the plurality of adhesive layers, respectively,
   wherein
the light-transmitting strips of the louver layer are each formed from light-transmitting silicone rubber, the light-shielding strips of the louver layer are formed from colored silicone rubber, and a width of the light-shielding strip of the louver layer is to be 10um or more.

Here, an aspect ratio of the light-transmitting strip, calculated by dividing a thickness of the louver layer by a width of the light-transmitting strip may be to be 5 or more to 13 or less.

An aspect ratio of the light-shielding strip, calculated by dividing the thickness of the louver layer by a width of the light-shielding strip may be to be 16 or more to 97 or less.

Further, the light-transmitting strips and the light-shielding strips of the louver layer can be formed at approximately the same height, so that the louver layer may be symmetrical on both front and back sides.

Furthermore, it is preferable that the silicone rubbers have a hardness of 73 or more to 83 or less when measured with a type A durometer in accordance with JIS K 6253, a tensile strength of 7.5MPa or more to 13.5MPaor less when measured in accordance with JIS K 6251, an elongation at break of 270% or more to 490% or less when measured in accordance with JIS K 6251, and a tear strength of 8kN/m or more to 28kN/m or less when measured in accordance with JIS K 6252.

In order to solve the above problems, the present invention provides a method for fabricating the viewing angle control element according to claim 1 or 2, the method comprising:
stacking the plurality of the silicone rubber sheets for the light-transmitting strips and the silicone rubber sheets for the light-shielding strips alternately to form a laminate;
pressurizing the laminate;
cutting a pressurized laminate to form the louver layer;
laminating light-transmitting silicone rubber to be an adhesive layer on both sides of the louver layer; and,
laminating and adhering a light-transmitting polycarbonate resin film to the silicone rubber to be the adhesive layer.

Here, the image display device in the claims includes at least an entertainment monitor, a sun visor monitor, a flip-down monitor, a DVD player, and the like. The light-shielding strip width of the louver layer also includes values that are rounded off to 10um or 20um. The aspect ratio of the light-transmitting strip also includes values that are rounded off to 5 or 13. The physical property values of the silicone rubber also include approximate values as long as they will not make any difference in the operation and effect. Furthermore, the viewing angle control element of the present invention is preferably symmetrical on both the front and back sides, and the total light transmittance should be 60% or more to 80% or less, preferably 60% or more to 77% or less, in the measurement angle range of 20° to -20°.

According to the present invention, the louver layer is made of silicone rubber, which has excellent heat resistance, so that the risk of a warp and deformation due to heat can be suppressed. In addition to silicone rubber, since the polycarbonate resin film exhibits an excellent heat resistance of 90°C or more, the viewing angle control element can be prevented from occurring of the significant warp even under high temperatures. Moreover, since the width of the light-shielding strip is not 9µm or less, but 10um or thicker, a sufficient light-shielding effect can be expected from the light-shielding strip.

### Advantages Of The Invention

The present invention has an effect of eliminating the risk of the occurrence of a warp or deformation even if the viewing angle control element is made thick to narrow the visible range or even if the environment of installation of the image display device becomes high in temperature. It is therefore possible to effectively prevent driver's careless driving, that is, the driver from peeping sideways at the image on the image display device in the passenger seat side while driving a car. In addition, since the width of the light-shielding strip of the louver layer is 10um or more, there is an advantage that the risk of light leakage can be effectively eliminated.

According to the invention described in claim 2, since the aspect ratio of the light-transmitting strip is to be 5 or more to 13 or less, it is possible to prevent the driver from peeping at the image due to an enlargement of the visible range. It is also possible to prevent a person in the passenger seat from being unable to view the image display device due to an excessively narrowed visible range.

According to the invention described in claim 3, it is possible to prevent warping and deformation of the viewing angle control element by numerically limiting the hardness measured with a type A durometer, tensile strength, elongation at break, and tear strength of the silicone rubber.

According to the invention described in claim 4, the laminate is formed by alternately stacking the plurality of silicone rubber sheets for light-transmitting strips and the plurality of the silicone rubber sheets for the light-shielding strips, and the laminate is pressurized and then cut to form the louver layer, so that it is possible to quickly and easily fabricate the louver layer having alternating the plurality of light-transmitting strips and the plurality of light-shielding strips.

### Brief Description Of Drawings

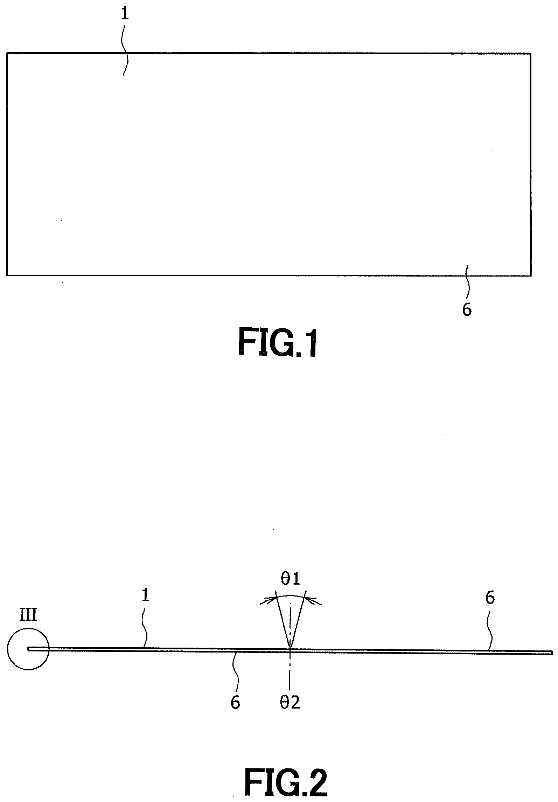

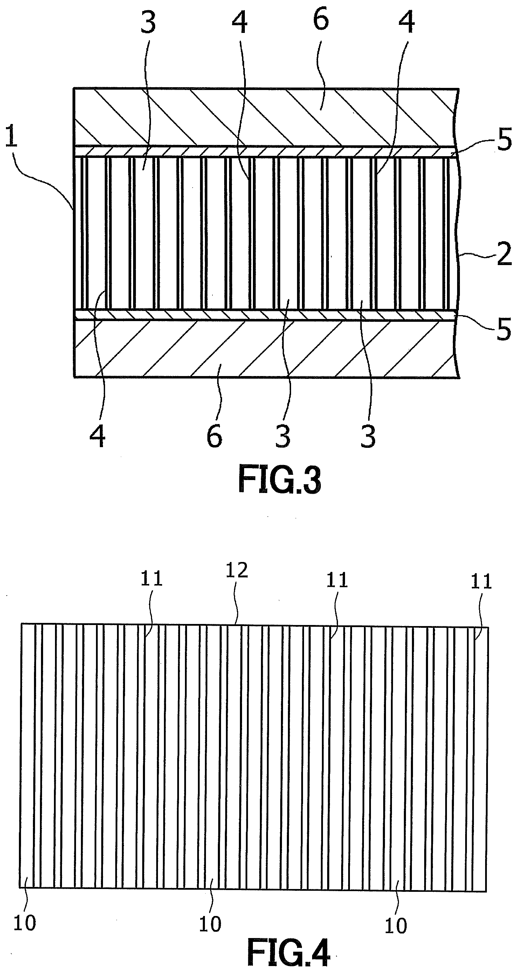

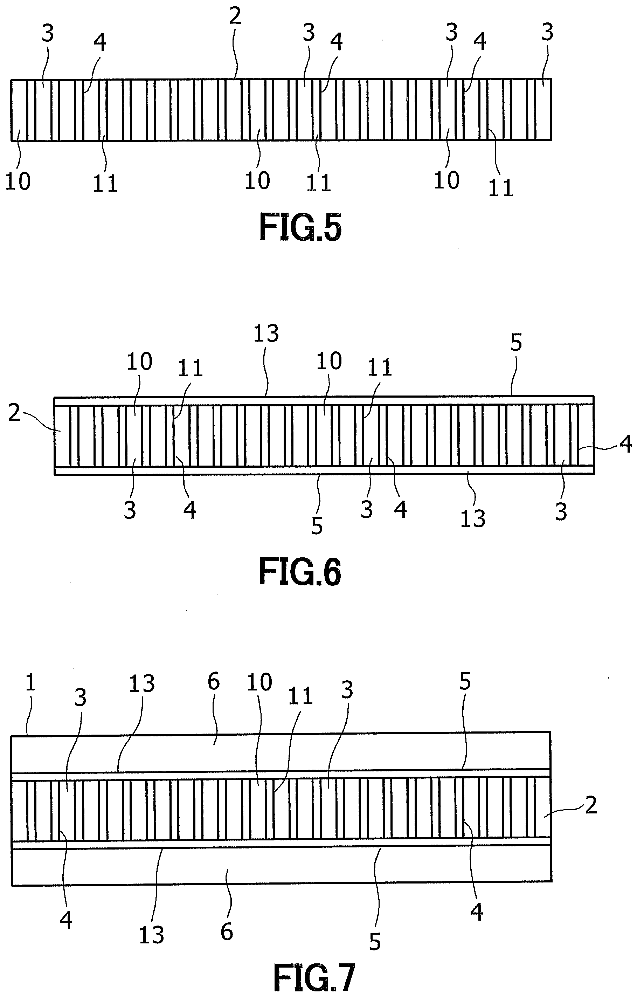

[FIG. 1]
   A plan illustrative diagram schematically showing an embodiment of a viewing angle control element according to the present invention.
[FIG. 2]
   A front illustrative diagram showing the embodiment of a viewing angle control element according to the present invention.
[FIG. 3]
   An enlarged cross-sectional diagram showing a part III in FIG. 2.
[FIG. 4]
   An illustrative diagram schematically showing a laminate in the embodiment of a fabrication method of a viewing angle control element according to the present invention.
[FIG. 5]
   An illustrative diagram showing a state where a louver layer is formed by cutting the pressurized laminate of FIG. 4.
[FIG. 6]
   An illustrative diagram showing a state where silicone rubber to be an adhesive layer is laminated respectively on both sides of the louver layer of FIG. 5.
[FIG. 7]
   An illustrative diagram showing a state where polycarbonate resin film is laminated and bonded respectively to the silicone rubber to be the adhesive layers of Fig. 6.
[FIG. 8]
   A graph showing the optical characteristics in an example of the viewing angle control element according to the present invention.

### Embodiments For Carrying Out The Invention

Hereinbelow, a preferred embodiment of the present invention will be described with reference to the drawings. As shown in FIGS. 1 to 7, a viewing angle control element 1 in the embodiment is a sheet that is preferably front-back symmetric and includes a louver layer 2 in which a plurality of light-transmitting strips 3 and a plurality of light-shielding strips 4 are arranged; a pair of light-transmitting adhesive layers 5 laminated on both surfaces of the louver layer 2, respectively; and a pair of light-transmitting polycarbonate resin films 6 laminated and bonded to the paired adhesive layers 5 respectively, to control a visible angle θ1. The sheet is attached to an entertainment monitor arranged on the passenger side of the dashboard of a car, and contributes to the achievement of Goal 9 of the SDGs (the United Nations' international goals for sustainable development, and sustainable development goals consisting of 17 global goals and 169 targets (achievement criteria)) adopted at the United Nations Summit.

The viewing angle control element 1 is not particularly limited, but is formed, for example, into a planar rectangle symmetrical on both sides with a size corresponding to the size of an entertainment monitor (12.3 inch wide, 11 inch wide, etc.) on the passenger seat side, and functions to control the visible angle θ1 within a range of 15° or more to 30° or less, preferably 20° or more to 30° or less, more preferably 20°, 25°, or 30°, from the viewpoint of reliably preventing the driver of the car from viewing the entertainment monitor of the passenger seat. As shown in FIG. 1, this viewing angle control element 1 is formed into a planar rectangle, specifically a planar rectangular shape, but may be formed with a notch in at least part of the periphery, may be formed with a curve portion in at least part of the periphery, or may be beveled in at least one of the four corners.

The viewing angle control element 1 transmits light from the entertainment monitor on the passenger seat side, but the overall light transmittance (total light transmittance) may be 55% or more and 100% or less, preferably 60% or more and 80% or less, more preferably 60% or more and 77% or less, and still more preferably 64% or more and 71.5% or less. This is because when the overall light transmittance is less than 55%, the viewability of the entertainment monitor from the passenger seat will deteriorate. Taking into account tolerances, the overall light transmittance may be 60% or more and 68% or less, or preferably around 64% when the visible angle θ1 of the viewing angle control element 1 is 20°, and may be 66.5% or more and 76.5% or less, or preferably around 71.5% when the visible angle θ1 of viewing angle control element 1 is 30°.

The light transmittance herein is a value calculated by a formula:
Light transmittance = (B/A) x 100 (unit: %), where in a device that measures the intensity of the test light emitted from a D65 illuminant that is specified in JIS Z 8720 as a light source, by a light receiving sensor, A is the output value of the light receiving sensor when there is no object to be measured on the optical path of the test light and B is the output value when an object to be measured is set on the optical path of the test light and the transmitted light that has passed through the object to be measured is received by the light receiving sensor.

The wavelength range of the light from an entertainment monitor may include the entire visible light range of 380 nm or more and 830 nm or less, or may be a part of it.

As shown in FIG. 3, the louver layer 2 is formed by repeatedly arranging a plurality of light-transmitting strips 3 and light-shielding strips 4 in a row with the pitch from each light-transmitting strip 3 to the adjacent light-shielding strip 4 set at 52µm or more to 141µm or less, with a thickness of 0.24mm or more to 1.45mm or less, preferably around 0.51mm, around 0.62mm, or around 1.20mm.

The installation angle between the light-transmitting strip 3 and the light-shielding strip 4 is adjusted to 0° or more to 1°. Further, the pitch from each light-transmitting strip 3 to the adjacent light-shielding strip 4 is 52µm or more to 141µm or less taking into account the tolerance, but in order to obtain a high light-shielding ratio, it is preferably 60um or more to 132µm or more, more preferably around 60um, around 75um, around 110µm or around 130µm, and optimally 110um. Since the effect of light diffraction becomes large when the visible angle θ1 is as small as 20°, the thickness of the louver layer 2 becomes large. The reason why the thickness of the louver layer 2 is 0.24mm or more to 1.45mm or less is that the visible angle θ1 can be easily adjusted and easily manufactured if the thickness is within this range.

When, for example, the viewing angle control element 1 is formed to have a visible angle of 20°, the thickness of the louver layer 2 is to be 0.57mm or more to 1.45mm or less, preferably around 1.2mm. On the other hand, when the viewing angle control element 1 is formed to have a visible angle of 25°, the thickness is to be 0.29mm or more to 0.74mm or more, preferably 0.39mm or more to 0.74mm or more, more preferably around 0.62mm. In addition, when the viewing angle control element 1 is formed to have a visible angle of 30°, the thickness is 0.24mm or more to 0.62mm or less, preferably 0.51mm or more to 0.62mm or less, more preferably around 0.51mm.

In the louver layer 2, each of the light-transmitting strips 3 is formed of a transparent silicone rubber that has excellent heat resistance of 90°C or more, cold resistance, moisture resistance, environmental resistance property, flexibility, transparency, etc., and contributes to preventing warping and deformation while each of the light-shielding strips 4 is formed of a silicone rubber formed by adding a light blocking effect color to a transparent silicone rubber, and these light-transmitting strips 3 and light-shielding strips 4 are formed at the same height, making the front and back symmetrical.

Examples of the silicone rubber include a silicone rubber composition generally called millable rubber, which is made of a diorganopolysiloxane with molecular chain ends blocked by hydroxysilyl or vinylsilyl groups and an organic peroxide; and an addition reaction type organosilicone rubber composition, which is made by compounding a diorganopolysiloxane having at least two vinyl groups bonded to silicon atoms in the molecule with an organohydrogenpolysiloxane having at least three hydrogen atoms bonded to silicon atoms (i.e., SiH bonds) in the molecule and a platinum catalyst. A specific example of the silicone rubber is KE-153U [a product manufactured by Shin-Etsu Chemical Co., Ltd.: the product name].

The silicone rubber should have a density of 1.21g/cm³ or more to 1.25g/cm³ or less, preferably around 1.24g/cm³ when measured at 23°C, in accordance with JIS K 6268. In view of preventing warping and deformation of the viewing angle control element 1, the hardness should be 73 or more to 83 or less, preferably 78 or more to 79 or less when measured with a type A rubber/plastic hardness tester (durometer) in accordance with JIS K 6253. In view of preventing warping and deformation, the tensile strength should be 7.5MPa or more to 13.5MPa or less, preferably around 10.5 MPa when measured in accordance with JIS K 6251.

The silicone rubber should have an elongation at break of 270% or more to 490% or less, preferably 310% or more to 380% or less when measured in accordance with JIS K 6251. In addition, in order to prevent warping and deformation, the tear strength (crescent-shaped) measured in accordance with JIS K 6252 should be 8kN/m or more to 28kN/m or less, preferably 13kN/m or more to 18kN/m or less. These measurements can be performed using measuring instruments and testing machines from M&K Co., Ltd, ITS Japan Inc., etc.

Each light-transmitting strip 3 is formed of transparent silicone rubber to have a vertically long rectangular cross section, and transmits light from the entertainment monitor in the passenger seat. The width of the light-transmitting strip of this light-transmitting strip 3 is set to be 37um or more to 126µm or less, preferably 45um or more to 115µm or less, more preferably around 45um, around 60um, around 95um or around 115µm, in view of achieving both anti-peekability and viewability.

The aspect ratio of the light-transmitting strip 3, calculated by dividing the thickness of the louver layer 2 by the width of the light-transmitting strip should be 5 or more to 13 or less, preferably 5.2 or more to 12.8 or less, and more preferably 5.3 or more to 12.7 or less. This is because when the aspect ratio is less than 5, the visible range is expanded, allowing the driver to peep at the screen. On the other hand, when the aspect ratio exceeds 13, the visible range becomes excessively narrow. As a result, even a slight shift in the viewing position to the left or right in the passenger seat will cause the entertainment monitor in the passenger seat to be outside the viewing range and become unviewable. In addition, the light transmittance when light is made incident only on the light-transmitting strips 3 should be 75% or more, preferably 75% or more to 100% or less, and more preferably 85% or more to 100% or less.

Each of the light-shielding strips 4 is formed of silicone rubber colored for light shielding, into a rectangular shape having a vertically long cross section that is thinner than the light-transmitting strip 3 to block the light from the entertainment monitor in the passenger seat. The silicone rubber may have a light-shielding tone thanks to the addition of a coloring agent such as a pigment or dye to the type of the silicone rubber for the light-transmitting strip with the above physical properties. Specific examples of the coloring agents include general organic or inorganic pigments such as carbonblack, iron oxide, titanium oxide, yellow iron oxide, disazo yellow, and phthalocyanine blue, but black carbonblack, which has excellent shielding properties, is optimal. When a black pigment is not used as the coloring agent, it is preferable to use a white pigment in combination to ensure light-shielding properties. Additionally, the coloring agent may be used alone or in combination of two or more types.

The light-shielding strips 4 are set to the same height as the adjacent light-transmitting strips 3 while in order to reliably prevent light leakage, the width of the light-shielding strip is set to 10um or more, preferably 10um or more to 20um or less, more preferably 15um or more to 20µm or less, and even more preferably 15µm, taking into account tolerances. The aspect ratio of the light-shielding strip 4 obtained by dividing the thickness of the louver layer 2 by the optimal light-shielding strip width of 15µm should be 16 or more to 97 or less, preferably and optimally 34 or more to 80 or less.

The aspect ratio of the light-shielding strip 4 is preferably in the range of 16 or more to 97 or less, but when, for example, the viewing angle control element 1 has a visible angle of 20°, it is preferably 38 or more to 97 or less. On the other hand, for example, when the viewing angle control element 1 has a visible angle of 30°, the aspect ratio is preferably 16 or more to 41 or less.

As shown in FIG. 3, each adhesive layer 5 is made of transparent silicone rubber having adhesive properties, serves to adhere the polycarbonate resin films 6 to both the front and back sides of the louver layer 2 and allow light to transmit from the passenger seat entertainment monitor. Applied as the transparent silicone rubber are silicone-based adhesives and adhesive silicone rubber sheets that have excellent heat resistance of 90°C or more, cold resistance, moisture resistance, environmental resistance property, flexibility, transparency, etc., and contribute to preventing warping and deformation. Specific examples of silicone-based adhesives include KE-1825 [a product manufactured by Shin-Etsu Chemical Co., Ltd.: the product name] and KE-1056 [a product manufactured by Shin-Etsu Chemical Co., Ltd. : the product name] and the like.

The thickness of the adhesive layer 5 is set to be 10um or more to 30um or less, preferably 20um or more to 30um or less, and more preferably around 20um or around 30um. In addition, the light transmittance when light is made incident only on the adhesive layer 5 should be 75% or more, preferably 75% or more to 100% or less, and more preferably 85% or more to 100% or less.

As shown in FIG. 3, each polycarbonate resin film 6 has excellent heat resistance of 90°C or more, weather resistance, impact resistance, dimensional accuracy, and transparency, and is not easily warped or deformed, and transmits light from the entertainment monitor in the passenger seat. The thickness of this transparent polycarbonate resin film 6 is set to be 0.1mm or more, preferably 0.1mm or more to 0.2mm or less, more preferably 0.189mm or more to 0.2mm or less, even more preferably 0.195mm or more to 0.2mm or less, and still more preferably around 0.2mm, from the viewpoint of reducing the installation space and preventing warping. The light transmittance when light is made incident only on the polycarbonate resin film 6 should be 75% or more, preferably 75% or more to 100% or less, and more preferably 85% or more to 100% or less.

The thus configured viewing angle control element 1 is mounted as a separate part on a holding frame of the entertainment monitor on the passenger side and set on the backlight side and limits the visible angle θ1 within the range of 20° or more to 30° or less, thereby effectively preventing the driver in the driver's seat from peeping sideways at the entertainment monitor on the passenger side. The visible angle θ1 of this viewing angle control element 1 can be measured by a meter or the like conforming to JIS K 7361, though not particularly limited. In addition, the maximum light transmittance angle θ2 of the viewing angle control element 1 shown in FIG. 2 is not particularly limited, but is adjusted depending on the positional relationship between the passenger seat position and the entertainment monitor on the passenger seat. This maximum light transmittance angle θ2 can also be measured by a haze meter or the like conforming to JIS K 7361.

When fabricating the viewing angle control element 1 in the above configuration, a plurality of transparent silicone rubber sheets 10 for the light-transmitting strip and a plurality of black-colored silicone rubber sheets 11 for the light-shielding strip are prepared, first. Then, these silicone rubber sheets 10 for the light-transmitting strip and the silicone rubber sheets 11 for the light-shielding strip are stacked alternately to form a laminate 12 (see FIG. 4). The silicone rubber sheets 10 for the light-transmitting strip and the silicone rubber sheets 11 for the light-shielding strip can be fabricated by extrusion molding method, calendar molding method, or press molding method. The silicone rubber sheets 10 for the light-transmitting strip and the silicone rubber sheets 11 for the light-shielding strip are preferably bonded by heat compression but may also be laminated alternately and bonded with a silicone-based transparent adhesive that can be expected to create reliable adhesion.

Then, the laminate 12 is heated and pressurized to form a block body, which is then cut to form the sheet-shaped louver layer 2 (see FIG. 5). Laminated on both the front and back sides of the louver layer 2 is transparent silicone rubber 13 that will become the adhesive layer 5 (see FIG. 6). The optimal transparent silicone rubber 13 is a silicone-based adhesive that has a high light transmittance after curing and can be expected to create reliable adhesion. The optimal silicone-based adhesive is one that presents a light transmittance of 65% or more, preferably 65% or more to 100% or less, and more preferably 80% or more to 100% or less, after it being applied to the louver layer 2 and cured.

After the transparent silicone rubber 13 to be the adhesive layer 5 has been thus laminated on both the front and back sides of the louver layer 2, a polycarbonate resin film 6 is laminated and bonded to each layer of silicone rubber 13 (see FIG. 7), and the silicone rubber 13 is dried and cured so as to firmly bond the front and back sides of the louver layer 2 to the pair of polycarbonate resin films 6. Finally, unnecessary portions of each polycarbonate resin film 6 are removed to complete the viewing angle control element 1. In this process, the transparent silicone rubber 13 to be the adhesive layer 5 is applied to and laminated on the polycarbonate resin film 6 first, then the polycarbonate resin film 6 may be laminated on both the front and back sides of the louver layer 2 via the adhesive layer 5, and dried and cured.

As described above, since the aspect ratio of the light-transmitting strip 3 is 5 or more to 13 or less, the visible angle θ1 can be significantly narrowed by making the louver layer 2 thick. It is therefore possible to effectively prevent careless driving, i.e., the driver from peeping sideways at the image on the entertainment monitor on the passenger side while driving a car. In addition, since the louver layer 2 and the adhesive layer 5 are formed of silicone rubber with excellent heat resistance while the light-transmitting strips 3 and the light-shielding strips 4 of the louver layer 2 are formed at the same height so that the front and back of the louver layer 2 are symmetrical, the risk of warping or deformation due to heat can be effectively eliminated.

In addition, when an entertainment monitor to which the viewing angle control element 1 is attached is installed on the dashboard of a car, the dashboard may become as hot as around 80°C. However, since the silicone rubber and the polycarbonate resin film 6 show excellent heat resistance of 90°C or more, it is possible to effectively prevent significant warping of the viewing angle control element 1 due to high temperatures. Therefore, problems such as Newton's rings which reduce viewability do not occur in the viewing angle control element 1.

Even when a separate viewing angle control element 1 is mounted on the holding frame of the entertainment monitor for the purpose of reducing fabrication costs, the control of the visible angle θ1 can be done without difficulty. In addition, since silicone rubber exhibits excellent coloring properties, it is possible to easily obtain a light-shielding strip 4 with excellent concealing power. Furthermore, since width of the light-shielding strip is 10um or more, rather than 1µm, 5µm, 9um, etc., the light-shielding strip 4 can expectedly produce an excellent light-shielding effect so that it is possible to reliably eliminate the risk of light leakage through the light-shielding strips 4.

In the above embodiment, the viewing angle control element 1 is mounted on the holding frame of the entertainment monitor on the passenger seat side so as to be located on the backlight side, but the viewing angle control element 1 may be attached to the entertainment monitor so as to be located on the front side. Further, a prism sheet that makes the light rays uniform may be attached to the entertainment monitor to converge the light rays, so that the converged light rays can be made incident on the viewing angle control element 1. Moreover, at least one of the pair of polycarbonate resin films 6 may be treated with a hard coating process or an anti-glare (AG) coating process that prevents uneasy glaring vision due to light reflection. Furthermore, at least one of the pair of polycarbonate resin films 6 may be laminated with a protective acrylic plate. Examples

Next, examples of the viewing angle control device and its fabrication method according to the present invention will be described together with comparative examples.

### [Example 1]

To fabricate a viewing angle control device with a visible angle of 20°, first, a plurality of transparent silicone rubber sheets for the light-transmitting strip and a plurality of black-colored silicone rubber sheets for the light-shielding strip were prepared. The plurality of silicone rubber sheets for the light-transmitting strip and the plurality of silicone rubber sheets for the light-shielding strip were alternately stacked and heat-pressed to form a laminate. For each silicone rubber sheet for the light-transmitting strip, a 95um thick KE153U [a product manufactured by Shin-Etsu Chemical Co., Ltd. : the product name] was used. For the silicone rubber sheet for the light-shielding strip, a 15um thick KE153U [a product manufactured by Shin-Etsu Chemical Co., Ltd. : the product name] was used, which is a blend of 100 parts by mass of silicone rubber and 15 parts by mass of carbon black.

In shaping the laminate, the hardness, which is measured by using a type A durometer, the tensile strength, the elongation at break and the tear strength (crescent-shaped), of the silicone rubber sheet for the light-transmitting strip used in the laminate were measured and are listed in Table 1. As a result of the measurements, the hardness of the silicone rubber sheet measured in accordance with JIS K 6253 was 78, the tensile strength of the silicone rubber sheet measured in accordance with JIS K 6251 was 10.5MPa, the elongation at break of the silicone rubber sheet measured in accordance with JIS K 6251 was 380%, and the tear strength of the silicone rubber sheet measured in accordance with JIS K 6252 was 18kN/m.

Then, the laminate was heat-pressed to form a block body. This block body was cut to form a sheet-like louver layer of 1.2mm thick. A silicone-based adhesive to be a transparent adhesive layer was applied to both the front and back sides of the louver layer, and a polycarbonate resin (PC resin) film of 0.2mm thick was laminated and bonded to each silicone-based adhesive, and dried and cured. Finally, unnecessary portions of the polycarbonate resin film were removed to complete a viewing angle control element having a viewing angle of 20°. The silicone-based adhesive used was KE-1825 [a product manufactured by Shin-Etsu Chemical Co., Ltd. : the product name].

The fabricated viewing angle control element was measured with a measuring microscope [a product manufactured by Mitutoyo Corporation: a product name MF-UB4020B]. As shown in Tables 2 and 3, the external dimensions were 288mm x 108mm, the light-transmitting strip width of the louver layer was 95um, the light-shielding strip width was 15um, the pitch from the light-transmitting strip to the adjacent light-shielding strip was 110um, and the thickness of the adhesive layer was 30um. The aspect ratio of the light-transmitting strip was calculated to be 12.6.

The visible angle of the viewing angle control element was measured using a haze meter HM-150 (a product manufactured by Murakami Color Research Laboratory : a product name] conforming to JIS K 7361, modified by attaching a rotating table, and confirmed to be 20°. Specifically, the rotating table was attached to the sample set unit having an opposed pair of an illuminant unit and a light receiver of the Haze Meter HM-150, and a viewing angle control element as a measurement sample having a size of 50mm square was mounted on the rotating table and rotated to measure the visible angle and the maximum light transmittance angle. The measurement work was performed repeatedly by rotating the viewing angle control element for the measurement sample by 1° after each measurement of the transmittance. The visible angle (visible range) was defined as the range in which the total light transmittance was 1% or more as measured by the Haze Meter HM-150.

After fabricating the viewing angle control element, three samples of the viewing angle control element were prepared, measured on a warp and an external dimensional change, and evaluated as "Good" or "Bad". The measurement was performed using a measuring microscope [a product manufactured by Mitutoyo Corporation: a product name MF-UB4020B] under conditions of 120°C over 240 hours. In the "Good/Bad" evaluation, "Good" shows that neither warp exceeding 0.5 mm nor external dimensional change exceeding 0.5mm was found in the viewing angle control element, whereas "Bad" shows that a warp exceeding 0.5mm or an external dimensional change exceeding 0.5mm was found in the viewing angle control element, causing a problem in practical use.

### [Example 2]

This example is basically the same as Example 1, but to fabricate a viewing angle control element with a visible angle of 20°, first, a plurality of transparent silicone rubber sheets for the light-transmitting strip and a plurality of black-colored silicone rubber sheets for the light-shielding strip were prepared. These silicone rubber sheets for the light-transmitting strip and multiple light-shielding strip were alternately stacked and heat-pressed to form a laminate. For each silicone rubber sheet for the light-transmitting strip was changed to a 45um thick KE153U [a product manufactured by Shin-Etsu Chemical Co., Ltd.: the product name].

In shaping the laminate, the hardness, which is measured by using a type A durometer, the tensile strength, the elongation at break and the tear strength, of the silicone rubber sheet for the light-transmitting strip used in the laminate were measured and are listed in Table 1. As a result of the measurements, the hardness of the silicone rubber sheet measured in accordance with JIS K 6253 was 78, the tensile strength of the silicone rubber sheet measured in accordance with JIS K 6251 was 10.5MPa, the elongation at break of the silicone rubber sheet measured in accordance with JIS K 6251 was 380%, and the tear strength of the silicone rubber sheet measured in accordance with JIS K 6252 was 18kN/m.

Then, the laminate was heat-pressed to form a block body. This block body was cut to form a sheet-like louver layer of 0.57mm thick. A silicone-based adhesive to be a transparent adhesive layer was applied to both the front and back sides of the louver layer, and a polycarbonate resin film of 0.2mm thick was laminated and bonded to each silicone-based adhesive, and dried and cured. Finally, unnecessary portions of each polycarbonate resin film were removed to fabricate a viewing angle control element having a viewing angle of 20°. The silicone-based adhesive used was KE-1825 [a product manufactured by Shin-Etsu Chemical Co., Ltd. : the product name].

The fabricated viewing angle control element was measured with a measuring microscope [a product manufactured by Mitutoyo Corporation: a product name MF-UB4020B]. As shown in Tables 2 and 3, the external dimensions were 288mm x 108mm, the light-transmitting strip width of the louver layer was 45um, the light-shielding strip width was 15um, the pitch from the light-transmitting strip to the adjacent light-shielding strip was 60um, and the thickness of the adhesive layer was 30um. The aspect ratio of the light-transmitting strip was calculated to be 12.7.

The visible angle of the viewing angle control element was measured using a haze meter HM-150 [a manufactured by Murakami Color Research Laboratory : the product name] conforming to JIS K 7361, modified by attaching a rotating table, and confirmed to be 20°. Specifically, the rotating table was attached to the sample set unit having an opposed pair of an illuminant unit and a light receiver of the Haze Meter HM-150, and a viewing angle control element as a measurement sample having a size of 50mm square was mounted on the rotating table and rotated to measure the visible angle and the maximum light transmittance angle. The measurement work was performed repeatedly by rotating the viewing angle control element for the measurement sample by 1° after each measurement of the transmittance. The visible angle (visible range) was defined as the range in which the total light transmittance was 1% or more as measured by the Haze Meter HM-150.

After fabricating the viewing angle control element, three samples of the viewing angle control element were prepared, measured on a warp and a dimensional change, and evaluated as "Good" or "Bad". The measurement was performed using a measuring microscope [a product manufactured by Mitutoyo Corporation: a product name MF-UB4020B] under conditions of 120°C over 240 hours. In the "Good/Bad" evaluation, "Good" shows that neither warp exceeding 0.5 mm nor external dimensional change exceeding 0.5mm was found in the viewing angle control element, whereas "Bad" shows that a warp exceeding 0.5mm or an external dimensional change exceeding 0.5mm was found in the viewing angle control element, causing a problem in practical use.

### [Example 3]

This example is basically the same as Example 1, but to fabricate a viewing angle control element with a visible angle of 25°, the block body was cut to form a sheet-like louver layer of 0.62mm thick. A silicone-based adhesive to be a transparent adhesive layer was applied to both the front and back sides of the louver layer, and a polycarbonate resin film of 0.2mm thick was laminated and bonded to each silicone-based adhesive, and dried and cured. Unnecessary portions of each polycarbonate resin film were removed to complete a viewing angle control element having a viewing angle of 25°. The aspect ratio of the light-transmitting strip of this viewing angle control element was calculated to be 6.5.

In fabricating the viewing angle control element, the hardness, which is measured by using a type A durometer, the tensile strength, the elongation at break and the tear strength, of the silicone rubber sheet for the light-transmitting strip used in the laminate were measured and are listed in Table 1. As a result of the measurements, the hardness of the silicone rubber sheet measured in accordance with JIS K 6253 was 79, the tensile strength of the silicone rubber sheet measured in accordance with JIS K 6251 was 10.5MPa, the elongation at break of the silicone rubber sheet measured in accordance with JIS K 6251 was 310%, and the tear strength of the silicone rubber sheet measured in accordance with JIS K 6252 was 13kN/m. After fabricating the viewing angle control element, three samples of the viewing angle control element were prepared, measured on a warp and an dimensional change and evaluated as "Good" or "Bad", as in Example 1.

### [Example 4]

This example is basically the same as Example 3, but to fabricate a viewing angle control element with a visible angle of 25°, first, a plurality of transparent silicone rubber sheets for the light-transmitting strip and a plurality of black-colored silicone rubber sheets for the light-shielding strip were prepared. The plurality of silicone rubber sheets for the light-transmitting strip and the plurality of silicone rubber sheets for the light-shielding strip were alternately stacked and heat-pressed to form a laminate. For each silicone rubber sheet for the light-transmitting strip was changed to a 60um thick KE153U [a product manufactured by Shin-Etsu Chemical Co., Ltd.: the product name].

In shaping the laminate, the hardness, which is measured by using a type A durometer, the tensile strength, the elongation at break and the tear strength, of the silicone rubber sheet for the light-transmitting strip used in the laminate were measured and are listed in Table 1. As a result of the measurements, the hardness of the silicone rubber sheet measured in accordance with JIS K 6253 was 79, the tensile strength of the silicone rubber sheet measured in accordance with JIS K 6251 was 10.5MPa, the elongation at break of the silicone rubber sheet measured in accordance with JIS K 6251 was 310%, and the tear strength of the silicone rubber sheet measured in accordance with JIS K 6252 was 13kN/m.

Then, the laminate was heat-pressed to form a block body. This block body was cut to form a sheet-like louver layer of 0.39mm thick. A silicone-based adhesive to be a transparent adhesive layer was applied to both the front and back sides of the louver layer, and a polycarbonate resin film of 0.2mm thick was laminated and bonded to each silicone-based adhesive, and dried and cured. Unnecessary portions of each polycarbonate resin film were removed to fabricate a viewing angle control element having a viewing angle of 25°. The silicone-based adhesive used was KE-1825 [a product manufactured by Shin-Etsu Chemical Co., Ltd.: the product name].

The fabricated viewing angle control element was measured with a measuring microscope [a product manufactured by Mitutoyo Corporation: a product name MF-UB4020B]. As shown in Tables 2 and 3, the external dimensions were 288mm x 108mm, the light-transmitting strip width of the louver layer was 60um, the light-shielding strip width was 15um, the pitch from the light-transmitting strip to the adjacent light-shielding strip was 75um, and the thickness of the adhesive layer was 30um. The aspect ratio of the light-transmitting strip was calculated to be 6.5. After fabricating the viewing angle control element, three samples of the viewing angle control element were prepared, measured on a warp and a dimensional change, and evaluated as "Good" or "Bad", as in Example 1.

### [Example 5]

This example is basically the same as Example 1, but to fabricate a viewing angle control element with a visible angle of 30°, the block body was cut to form a sheet-like louver layer of 0.51mm thick. A silicone-based adhesive to be a transparent adhesive layer was applied to both the front and back sides of the louver layer, and a polycarbonate resin film of 0.2mm thick was laminated and bonded to each silicone-based adhesive, and dried and cured. Unnecessary portions of each polycarbonate resin film were removed to fabricate a viewing angle control element having a viewing angle of 30°. The aspect ratio of the light-transmitting strip of this viewing angle control element was calculated to be 5.4.

In fabricating the viewing angle control element, the hardness, which is measured by using a type A durometer, the tensile strength, the elongation at break and the tear strength, of the silicone rubber sheet for the light-transmitting strip used in the laminate were measured and are listed in Table 1. As a result of the measurements, the hardness of the silicone rubber sheet measured in accordance with JIS K 6253 was 79, the tensile strength of the silicone rubber sheet measured in accordance with JIS K 6251 was 10.5MPa, the elongation at break of the silicone rubber sheet measured in accordance with JIS K 6251 was 310%, and the tear strength of the silicone rubber sheet measured in accordance with JIS K 6252 was 13kN/m. After fabricating the viewing angle control element, three samples of the viewing angle control element were prepared, measured on a warp and a dimensional change, and evaluated, as in Example 1.

### [Example 6]

This example is basically the same as Example 5, but to fabricate a viewing angle control element with a visible angle of 30°, first, a plurality of transparent silicone rubber sheets for the light-transmitting strip and a plurality of black-colored silicone rubber sheets for the light-shielding strip were prepared. The plurality of silicone rubber sheets for the light-transmitting strip and the plurality of silicone rubber sheets for the light-shielding strip were alternately stacked and heat-pressed to form a laminate. For each silicone rubber sheet for the light-transmitting strip was changed to a 115µm thick KE153U [a product manufactured by Mitutoyo Corporation: a product name].

In shaping the laminate, the hardness, which is measured by using a type A durometer, the tensile strength, the elongation at break and the tear strength, of the silicone rubber sheet for the light-transmitting strip in the laminate were measured and are listed in Table 1. As a result of the measurements, the hardness of the silicone rubber sheet measured in accordance with JIS K 6253 was 79, the tensile strength of the silicone rubber sheet measured in accordance with JIS K 6251 was 10.5MPa, the elongation at break of the silicone rubber sheet measured in accordance with JIS K 6251 was 310%, and the tear strength of the silicone rubber sheet measured in accordance with JIS K 6252 was 13kN/m.

Then, the laminate was heat-pressed to form a block body. This block body was cut to form a sheet-like louver layer of 0.62mm thick. A silicone-based adhesive to be a transparent adhesive layer was applied to both the front and back sides of the louver layer, and a polycarbonate resin film of 0.2mm thick was laminated and bonded to each silicone-based adhesive, and dried and cured. Unnecessary portions of each polycarbonate resin film were removed to fabricate a viewing angle control element having a viewing angle of 30°. The silicone adhesive used was KE-1825 [a product manufactured by Mitutoyo Corporation: a product name].

The fabricated viewing angle control element was measured with a measuring microscope [a product manufactured by Mitutoyo Corporation: the product name MF-UB4020B]. As shown in Tables 2 and 3, the external dimensions were 288mm x 108mm, the light-transmitting strip width of the louver layer was 115µm, the light-shielding strip width was 15um, the pitch from the light-transmitting strip to the adjacent light-shielding strip was 130µm, and the thickness of the adhesive layer was 30um. The aspect ratio of the light-transmitting strip was calculated to be 5.4.

After fabricating the viewing angle control element, three samples of the viewing angle control element were prepared, measured on a warp and a dimensional change, and evaluated as "Good" or "Bad". The measurement was performed using a measuring microscope MF-UB4020B [a product manufactured by Mitutoyo Corporation: the product name MF-UB4020B] under conditions of 120°C over 240 hours. In the "Good/Bad" evaluation, "Good" was given when almost no warp or external dimensional change was observed in the viewing angle control element and also when a warp or an external dimensional change was observed in the viewing angle control element but did not cause any practical problems, while "Bad" was given when a warp or an external dimensional change was observed in the viewing angle control element and caused practical problems.

### [Comparative Example 1]

In order to obtain a viewing angle control element, a commercial acrylic resin sheet was prepared for comparison instead of the louver layer, and this resin sheet was used as it was as a viewing angle control element. When this viewing angle control element was measured using the measuring microscope [a product manufactured by Mitutoyo Corporation: the product name MF-UB4020B], the external dimensions were 288mm x 108mm, and the thickness of the resin sheet was 0.5mm.

The viewing angle control element was thus fabricated. However, since this viewing angle control element have neither louver layer nor polycarbonate resin film, the hardness measured by the type A durometer, the tensile strength, the elongation at break, and the tear strength of the silicone rubber sheets of the light-transmitting strip and the light-shielding strip were not measured. On the other hand, three samples of the viewing angle control element were prepared, measured on a warp and an external dimensional change were measured, and evaluated as "Good" or "Bad". The measurement was performed using the measuring microscope [a product manufactured by Mitutoyo Corporation: the product name MF-UB4020B] under conditions of 120°C over 240 hours. In the "Good/Bad" evaluation, "Good" indicates that neither warp exceeding 0.5mm nor external dimensional change exceeding 0.5mm was found in the viewing angle control element, while "Bad" indicates that a warp exceeding 0.5m or an external dimensional change exceeding 0.5mm was found in the viewing angle control element, causing a problem in practical use.

### [Comparative Example 2]

This comparative example is basically the same as Example 1, but to fabricate a viewing angle control element with a visible angle of 20°, the block body was cut to form a sheet-like louver layer of 1.2mm thick. A silicone-based adhesive to be a transparent adhesive layer was applied to both the front and back sides of the louver layer, and a polyethylene terephthalate resin (PET resin) film of 0.188mm thick, which is prone to warping, was laminated and bonded to each silicone-based adhesive, and dried and cured. Unnecessary portions of the polyethylene terephthalate resin film were removed to fabricate a viewing angle control element having a viewing angle of 20°. The aspect ratio of the light-transmitting strip of this viewing angle control element was calculated to be 12.6.

In fabricating the viewing angle control element, the hardness, which is measured by using the type A durometer, the tensile strength, the elongation at break and the tear strength, of the silicone rubber sheet for the light-transmitting strip used in the fabrication were measured and are listed in Table 1. As a result of the measurements, the hardness of the silicone rubber sheet measured in accordance with JIS K 6253 was 78, the tensile strength of the silicone rubber sheet measured in accordance with JIS K 6251 was 10.5MPa, the elongation at break of the silicone rubber sheet measured in accordance with JIS K 6251 was 380%, and the tear strength of the silicone rubber sheet measured in accordance with JIS K 6252 was 18kN/m. As in Comparative Example 1, three samples of the viewing angle control element were prepared, measured on a warp and an dimensional change, and evaluated as "Good" or "Bad".

**[Table 1]**

| Silicone Rubber Sheet For Viewing Angle Control Element | Example 1 | Example 2 | Example 3 | Example 4 | Example 5 | Example 6 | Comparative Example 1 | Comparative Example 2 |
|---|---|---|---|---|---|---|---|---|
| Thickness Of Silicone Rubber Sheet For Light-Transmitting Strips [µm] | 95 | 45 | 95 | 60 | 95 | 115 | Unmeasured | 95 |
| Thickness Of Silicone Rubber Sheet For Light-Shielding Strips [µm] | 15 | 15 | 15 | 15 | 15 | 15 | Unmeasured | 15 |
| Hardness Of Silicone Rubber Sheet For Light-Transmitting Strips [Type A] | 78 | 78 | 79 | 79 | 79 | 79 | Unmeasured | 78 |
| Tensile Strength Of Silicone Rubber Sheet For Light-Transmitting Strips [Mpa] | 10.5 | 10.5 | 10.5 | 10.5 | 10.5 | 10.5 | Unmeasured | 10.5 |
| Elongation At Break Of Silicone Rubber Sheet For Light-Transmitting Strips [%] | 380 | 380 | 310 | 310 | 310 | 310 | Unmeasured | 380 |
| Tear Strength Of Silicone Rubber Sheet For Light-Transmitting Strips [kN/m] | 18 | 18 | 13 | 13 | 13 | 13 | Unmeasured | 18 |

**[Table 2]**

| | Viable Angle Of Viewing Angle Control Element [Deg.] | Louver Layer Thickness [mm] | Width Of Light-Transmitting Strip [µm] | Width of Light-Shielding Strip [µm] | Aspect Ratio of Light-Transmitting Strip | Pitch From Light-Transmitting Strip to Light-Shielding Strip [µm] |
|---|---|---|---|---|---|---|
| Example 1 | 20 | 1.2 | 95 | 15 | 12.6 | 110 |
| Example 2 | 20 | 0.57 | 45 | 15 | 12.7 | 60 |
| Example 3 | 25 | 0.62 | 95 | 15 | 6.5 | 110 |
| Example 4 | 25 | 0.39 | 60 | 15 | 6.5 | 75 |
| Example 5 | 30 | 0.51 | 95 | 15 | 5.4 | 110 |
| Example 6 | 30 | 0.62 | 115 | 15 | 5.4 | 130 |
| Comparative Example 1 | - | 0.5 (Thickness of the resin sheet) | - | - | - | - |
| Comparative Example 2 | 20 | 1.2 | 95 | 15 | 12.6 | 110 |

**[Table 3]**

| | Adhesive Layer Thickness [µm] | Resin Film | Resin Film Thickness [µm] | Warp of Post-Test [mm] | External Dimensional Change [mm] | Evaluation |
|---|---|---|---|---|---|---|
| Example 1 | 30 | PC Resin | 0.2 | 0.5 or lower | -0.104 | Good |
| Example 2 | 30 | PC Resin | 0.2 | 0.5 or lower | -0.064 | Good |
| Example 3 | 30 | PC Resin | 0.2 | 0.5 or lower | -0.066 | Good |
| Example 4 | 30 | PC Resin | 0.2 | 0.5 or lower | -0.052 | Good |
| Example 5 | 30 | PC Resin | 0.2 | 0.5 or lower | -0.06 | Good |
| Example 6 | 30 | PC Resin | 0.2 | 0.5 or lower | -0.067 | Good |
| Comparative Example 1 | 30 | Acrylic Resin | 0.5 | 0.5 or lower | -5.665 | Bad |
| Comparative Example 2 | 30 | PET Resin | 0.188 | 3 to 4.5 | -1.296 | Bad |

### [Evaluation]

In all examples of viewing angle control element, it was possible to appropriately narrow the visible angle. In addition, when the warp and the dimensional change of the viewing angle control element of each example were measured, the warp and the dimensional change were hardly found as low as 0.5mm or less. These effects were most distinctive in Examples 2, 4, and 5, which would possible be commercialized. Accordingly, when the viewing angle control element of each example is mounted on the holding frame of an entertainment monitor, it is expected to be able to prevent the viewing angle from becoming difficult to control.

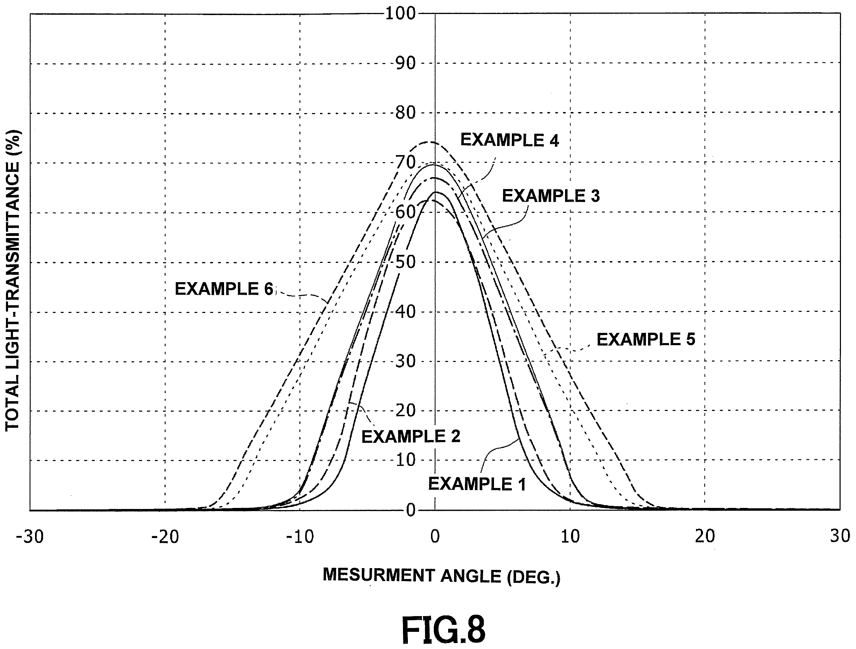

The optical characteristics of the viewing angle control element of each example were also measured and graphed in FIG. 8. As a result, the total light transmittance of the viewing angle control element was 60% or more to 70% or less in the measurement angle range of 10° to -10°, and 68% or more to 75% or less in the measurement angle range of 20° to -20°. The visible angle of the viewing angle control element was defined to a range of 1% or more of the total light transmittance measured by a haze meter HM-150, as in Example 1. From the above optical characteristics, it is presumed to be able to prevent degradation of the viewability of the entertainment monitor from the passenger seat when the viewing angle control element of the example is mounted to the holding frame of the entertainment monitor.

In contrast, in the case of the viewing angle control element of Comparative Example 1, since a simple acrylic resin sheet without a viewing angle control function was used, it was not possible to narrow the visible angle. In addition, when the warp and the dimensional change of the viewing angle control element was measured, a large dimensional change of -5.6mm or more was observed although there was no warp, raising serious doubt as to its practicality. Therefore, it is presumed to cause difficulties to control the visible angle when the viewing angle control element of Comparative Example 1 is mounted on the holding frame of an entertainment monitor. In addition, it is presumed that the warp will increase due to the large dimensional change of the acrylic resin sheet if the polycarbonate resin film is laminated and bonded to the acrylic resin sheet.

When the warp and the dimensional change of the viewing angle control element of Comparative Example 2 was measured, a warp of 3mm or more and a dimensional change of 1.2mm or more were observed because a polyethylene terephthalate resin film was used, raising doubt as to its practicality. Therefore, similarly to Comparative Example 1, it is presumed to cause difficulties to control the visible angle when the viewing angle control element of Comparative Example 2 is mounted on the holding frame of an entertainment monitor.

### Industrial Applicability

The viewing angle control element and its fabrication method according to the present invention can be used in the field of automobile manufacturing.

### Description Of Reference Numerals

- 1: viewing angle control element
- 2: louver layer
- 3: light-transmitting strip
- 4: light-shielding strip
- 5: adhesive layer
- 6: polycarbonate resin film
- 10: silicone rubber sheet for light-transmitting strip
- 11: silicone rubber sheet for light-shielding strip
- 12: laminate
- 13: silicone rubber
- θ1: visible angle

## Claims

1. A viewing angle control element mounted on an image display device on a passenger side dashboard of a car for restricting a driver from peeping into the image display device on a passenger side by controlling a visible angle within a predetermined range, comprising:
a louver layer in which a plurality of light-transmitting strips and a plurality of light-shielding strips are arrayed alternately;
a plurality of adhesive layers laminated on both sides of the louver layer, respectively; and,
a plurality of light-transmissive polycarbonate resin films laminated and bonded to the plurality of adhesive layers, respectively,
wherein
the light-transmitting strips of the louver layer are each formed from light-transmitting silicone rubber, the light-shielding strips of the louver layer are formed from colored silicone rubber, and a width of the light-shielding strip of the louver layer is to be 10um or more.

2. The viewing angle control device according to claim 1, wherein an aspect ratio of the light-transmitting strip, calculated by dividing a thickness of the louver layer by a width of the light-transmitting strip is to be 5 or more to 13 or less.

3. The viewing angle control element according to claim 1 or 2, wherein the silicone rubbers have a hardness of 73 or more to 83 or less when measured with a type A durometer in accordance with JIS K 6253, a tensile strength of 7.5MPa or more to 13.5MPa or less when measured in accordance with JIS K 6251, an elongation at break of 270% or more to 490% or less when measured in accordance with JIS K 6251, and a tear strength of 8kN/m or more to 28kN/m or less when measured in accordance with JIS K 6252.

4. A method for fabricating the viewing angle control element according to claim 1 or 2, the method comprising:
stacking the plurality of the silicone rubber sheets for the light-transmitting strips and the plurality of the silicone rubber sheets for the light-shielding strips alternately to form a laminate;
pressurizing the laminate;
cutting a pressurized laminate to form the louver layer;
laminating light-transmitting silicone rubber to be an adhesive layer on both sides of the louver layer; and,
laminating and adhering a light-transmitting polycarbonate resin film to the silicone rubber to be the adhesive layer.
